Europäisches Patentamt

European Patent Office

Office européen des brevets

(11) Veröffentlichungsnummer: **0 162 195**
**A1**

(12) ## EUROPÄISCHE PATENTANMELDUNG

(21) Anmeldenummer: **85101775.6**

(22) Anmeldetag: **18.02.85**

(51) Int. Cl.⁴: **C 02 F 1/66**
**B 01 D 53/34**

(30) Priorität: **20.02.84 DE 3406097**

(43) Veröffentlichungstag der Anmeldung:
**27.11.85 Patentblatt 85/48**

(84) Benannte Vertragsstaaten:
**IT**

(71) Anmelder: **Krause, Willibald**
**Unterboihinger Strasse 29**
**D-7317 Wendlingen(DE)**

(72) Erfinder: **Roeske, Wolfgang**
**Im Günztal 14**
**D-8870 Günzburg(DE)**

(72) Erfinder: **Göddeke, Heinrich**
**Parkstrasse 19**
**D-5407 Boppard(DE)**

(74) Vertreter: **Huber, Bernhard, Dipl.-Chem. et al,**
**Patentanwälte H. Weickmann, Dr. K. Fincke F.A.**
**Weickmann, B. Huber Dr. H. Liska, Dr. J. Prechtel**
**Möhlstrasse 22 Postfach 860 820**
**D-8000 München 86(DE)**

(54) **Vorrichtung zur Neutralisation von sauren Kondensaten.**

(57) Eine Vorrichtung zur Neutralisation von Rauchgas- und Abgas-Kondensaten ist dadurch gekennzeichnet, daß in einem Durchflußbehälter nacheinander angeordnet sind eine Quarzkiesschicht, eine Aktivkohlenschicht und eine Magnesiumoxidschicht.

FIG. 1a

EP 0 162 195 A1

- 1 -

B e s c h r e i b u n g

Die Erfindung betrifft eine Vorrichtung zur Neutralisation von Rauchgas- und Abgaskondensaten unter Verwendung von Magnesiumoxid.

Energieeinsparung ist eine der wichtigsten Aufgaben unserer Zeit. Neben der Einsparung von Brennstoffen spielt heute aber auch die Erhaltung unserer Umwelt eine entscheidende Rolle. Die Bedeutung von Energieeinsparung und Umweltschutz wird durch eine Vielzahl von Gesetzen und Verordnungen unterstrichen.

So werden z. B. vom Gesetzgeber bestimmte Mindestanforderungen an die Wärmedämmung von Gebäuden, an den Wirkungsgrad von Heizkesseln und an die Belastung der Luft durch Rauch- und Abgase gestellt. Die größten Möglichkeiten zur Energieeinsparung liegen im Bereich der privaten Haushalte. Der Anteil des Energieverbrauchs im haushaltlichen Bereich am Gesamtenergieverbrauch in der Bundesrepublik Deutschland beträgt ca. 45 %. Dieser hohe Anteil zeigt deutlich die Notwendigkeit und den Nutzen energiesparender Maßnahmen auf diesem Sektor.

In den letzten zehn Jahren ist die Optimierung von Heizkesseln durch die Einführung neuer Brennertypen, verbunden mit elektronischen Meß- und Regelsystemen, weitgehend durchgeführt worden. Eine zusätzliche Steigerung der Wirkungsgrade moderner Heizkessel erfolgt durch die Nutzung der Kondensationswärme des Abgases, d. h. über eine Nutzung des Brennwertes. Für diese Aufgabe wurde ein völlig neuer Kesseltyp, der Brennwertkessel, entwickelt. Dabei wird die im Abgas noch vorhandene Restwärme nahezu vollständig ausgenutzt, indem das Abgas bis unter den Taupunkt abgekühlt wird. Die dabei freiwerdende Kondensationswärme (latente Wärme) ergibt, zusammen mit der noch gewonnenen fühlbaren Wärme, eine Wirkungsgradsteigerung von 20 bis 30% gegenüber dem konventionellen Betrieb. Durch nachgeschaltete Wärmeaustauscher wird das Rauch- und Abgas entweder in den Feuerstätten selbst oder nachgeschaltet im Schornstein abgekühlt. Auch bei Sorptionswärmepumpen mit feuerbeheizten Austreibern und Kompressionswärmepumpen mit verbrennungsmotorischem Antrieb treten vergleichbare Verhältnisse auf.

Der zu erwartende Kondensatanfall hängt vom Umfang der Kondensation ab. Bei vollständiger Kondensation fallen etwa folgende Kondensatmengen an:

1,0 kg Kondensat/kg Heizöl
1,4 kg Kondensat/m³ Erdgas.

Bezogen auf die Heizleistung liegt der zu erwartende maximale Kondensatanfall bei etwa 0,08 kg/kWh. In der Praxis liegen diese Werte infolge nur partieller Kondensation um etwa 50 % niedriger. Die Menge des anfallenden sauren Kondensats ist also nicht unerheblich.

Sie beträgt z. B. bei einem Heizölverbrauch von 4000 l pro Heizperiode etwa 2000 bis 2500l. Das anfallende Kondensat ist mit wasserlöslichen Bestandteilen der Rauch- und Abgase angereichert. Hierbei handelt es sich

- 3 -

hauptsächlich um Schwefeloxide ($SO_x$) und Stickstoffoxide ($NO_x$), die zu einer Senkung des pH-Wertes des
Kondensats beitragen. Außerdem enthält es gelöste Kohlenwasserstoffe, Teer und Ruß. Es wird somit durch die
Kondensation ein großer Teil der umweltbelastenden Gase
aus dem Rauch- und Abgas entfernt.

Die pH-Werte des anfallenden Kondensats betragen beim
Einsatz von Heizöl EL (mit einem Schwefelgehalt von 0,3
Gew.-%) etwa pH 2 und bei Erdgas etwa pH 3 bis 4. Es
handelt sich hierbei um stark saure wäßrige Lösungen.
Da nach dem Regelwerk der Abwassertechnischen Vereinigung e.V. (ATV), Arbeitsblatt A 115, Ausgabe Jan. 1983
"Hinweise für das Einleiten von Abwasser in eine öffentliche Abwasseranlage", erst ein pH-Wert von 6,5 bis 10
bei der Einleitung in öffentliche Abwasseranlagen als
unbedenklich anzusehen ist, bestehen gegen die Einleitung
dieser sauren Kondensate aus wasserwirtschaftlicher
Sicht Bedenken und zwar sowohl wegen der befürchteten
Werkstoffkorrosion der Entwässerungssysteme (Angriff
und Zerstörung der Betonableitungsrohre) als auch wegen
der möglichen Störung der biologischen Stufe von Kläranlagen.

Deshalb müssen die Kondensate vor Ableitung in das
öffentliche Abwassersystem neutralisiert werden.

Die Neutralisation des Kondensates nur durch Vermischen
mit Trinkwasser ist zu teuer, da für eine vollständige
Neutralisation durch die Karbonathärte z. B. bei Wasser
mit einer Karbonathärte von 10° dKH pro 1 Kondensat 90 l
Wasser nötig wäre. Die Neutralisation mit häuslichem
Abwasser ist nicht ausreichend und dazu noch unzuverlässig.

- 4 -

Bisher wurde die Neutralisation der anfallenden sauren
Kondensate mit Natronlauge oder Soda-Lösung vorgenommen.
Der Nachteil dabei ist, daß der Umgang mit Natronlauge
und Sodalösung besonderen Vorsichtsmaßnahmen nach der
Arbeitsstoffverordnung (laugen- und säurefeste Schutzkleidung, Schutzhandschuhe, Schutzbrille etc.) unterliegt und für den häuslichen Bereich zu gefährlich und
aufwendig ist. Weiterhin muß die Zugabe von Natronlauge
oder Soda-Lösung über Dosiereinrichtungen wie elektrisch
betätigte Magnetventile, Dosierpumpen oder ähnliche
Aggregate erfolgen. Vorratsbehälter für die Natronlauge
bzw. Soda-Lösung, Auffang- und Reaktionsbehälter mit
Niveauregelungen und Ablaßventilen sind außerdem notwendig. Weiterhin sind die Kosten für die Natronlauge
oder die Soda-Lösung nicht unerheblich.

Aufgabe der Erfindung war es nun, die oben erläuterten
Probleme der Kondensat-Neutralisation zu lösen und die
Nachteile der bisherigen Verfahren, auszuschließen.

Diese Aufgabe wird gelöst durch eine Vorrichtung zur
Neutralisation von Rauchgas- und Abgaskondensaten, die
dadurch gekennzeichnet ist, daß in einen Durchlaufbehälter nacheinander eine Quarzkiesschicht, eine Aktivkohleschicht und eine Magnesiumoxid/Magnesiumcarbonatschicht
angeordnet sind. Die erfindungsgemäße Vorrichtung
ermöglicht es, einfach, sicher und ungefährlich anfallendes Kondensat zu neutralisieren und ist auch von
Laien zu verstehen und zu handhaben. Der technische
Aufwand ist gering und die Vorrichtung ist von der
Investitions- und Betriebskostenseite her wesentlich
günstiger als die bisherigen Verfahren zur Kondensat-
Neutralisation.

Die erfindungsgemäße Vorrichtung ist ein Durchflußbehälter, in dem das saure Kondensat über drei verschiedene Schichten geleitet und dadurch neutralisiert wird. Zuerst wird das Kondensat durch eine Quarzkiesschicht geleitet. Dabei wird es gleichmäßig und fein
verteilt und in geringem Maße auch mechanisch
gereinigt. Dann wird es über eine Aktivkohleschicht
geleitet. Die Aktivkohle ist in der Lage, die im Kondensat befindlichen Kohlenwasserstoffe, wie z. B.
Heizöl, Verbrennungsrückstände und Teer, zu adsorbieren. Dadurch wird die Oberfläche des Neutralisationsgranulats nicht belegt und bleibt für die pH-Wert-Neutralisation aktiv.

Als Neutralisationsmittel wird Magnesiumoxid/Magnesiumcarbonat verwendet. Hierunter wird eine Mischung aus
Magnesiumoxid und Magnesiumcarbonat verstanden, die
zweckmäßig 10 bis 90 Mol-% Magnesiumoxid und entsprechend
etwa 90 bis 10 Mol-% Magnesiumcarbonat enthält. Die
Mischung liegt zweckmäßig als Granulat vor, wobei jedes
Granulatkorn MgO und $MgCO_3$ enthalten kann oder jeweils
nur aus einem dieser Bestandteile bestehende Granalien
miteinander gemischt sind. Besonders geeignet ist ein
kugeliges, poröses, synthetisch aus Magnesiumverbindungen bestehendes, in Wasser schwer lösliches Material,
das überwiegend Magnesiumoxid enthält mit stabiler
Kornstruktur und hoher Reaktionsfähigkeit.

Bei der Neutralisation wird nur das Magnesiumoxid-/Magnesiumcarbonat-Granulat verbraucht, das abhängig von
der Durchflußmenge und dem pH-Wert des sauren Kondensats
ersetzt werden muß. Das bei der Neutralisation entstehende Magnesiumsulfat ist und bleibt voll wasserlöslich. Eine Störung durch Ablagerungen findet deshalb
nicht statt.

Dieses Material ist einfach zu handhaben und ungefährlich. Besondere Vorsichtsmaßnahmen brauchen nicht beachtet zu werden. Das Material stellt, im Gegensatz
zu Natronlauge oder Soda-Lösung, keine Gefahr für den
Laien dar.

Andere feste Neutralisationsmittel wie Kalziumcarbonat
(Marmorkies, Kalkstein) oder Magnesiumverbindungen, die
einen hohen Anteil an Kalzium enthalten, haben den
Nachteil, daß sie an ihrer Oberfläche durch den relativ
hohen Sulfat-Gehalt der Kondensate sehr schnell durch
ausfallendes und die Oberfläche der Granulate belegendes
Kalziumsulfat inaktiv werden. Diesen Nachteil hat das
Magnesiumoxid/Magnesiumcarbonat nicht.

Für die Kondensat-Neutralisation hat sich eine Korngröße von 1 bis 10 mm und bevorzugt von 2,0 bis 5,0 mm,
als geeignet erwiesen. Die notwendige Schichthöhe und
Menge des Materials hängen von der jeweiligen Durchflußmenge und vom pH-Wert des Kondensats ab. Durch eine
entsprechende Mindestschichthöhe und Mindestmenge des
Neutralisationsgranulats sowie eine ausreichende Verweilzeit kann eine sichere Neutralisation von sauren
Kondensaten gewährleistet werden. Die Werte des abfließenden Kondensats liegen bei entsprechenden Schichthöhen
und Verweilzeiten bei pH-Werten über pH 6,5 insbesondere bei etwa pH 7,5 bis 8,5. Hierbei ist es gleichgültig, wie niedrig der Ausgangs-pH-Wert (z. B. Gas-Kondensat pH 3 bis 4, Heizöl EL-Kondensat pH 2) war oder
ob schwankende pH-Werte im Kondensat vorkommen. Eine
Verweilzeit von etwa einer halben Stunde hat sich dabei
als zweckmäßig erwiesen.

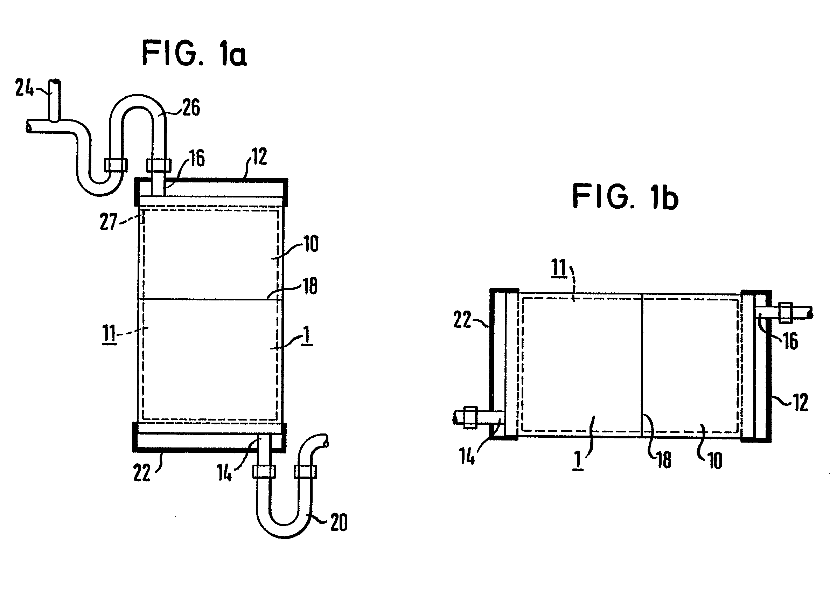

Eine Ausführungsform der erfindungsgemäßen Vorrichtung
für die Kondensat-Neutralisierung ist in Fig. 1 dargestellt.

Der Durchflußbehälter 1 besteht aus einem Zylinder
10, der vorzugsweise aus transparentem Kunststoff wie
Polyethylen oder PVC gefertigt ist. Der Zylinder 10 hat
einen Zulauf 14. Über diesen Zulauf 14 kann das saure
Kondensat entweder frei zufließen oder es kann über
eine Kondensatförderpumpe in den Zylinder 10 gedrückt
werden. Der Zylinder 10 hat einen Boden 22 und ist oben
mit einem abschraubbaren Deckel 12 versehen, der
gegebenenfalls verplombt sein kann. In dem Deckel 12
befindet sich der Ablauf 16. Hinter dem Ablaufstutzen
kann ein Anschluß 24 für Verdünnungswasser installiert
sein.Der Durchfluß erfolgt vom Boden des Behälters über
den Zulauf 14 zum Ablauf 16 im Deckel 12. Es erfolgt
also eine Durchströmung von unten nach oben. Sowohl vor
dem Zulaufstutzen als auch nach dem Ablaufstutzen
können Geruchsverschlüsse 20,26 installiert werden.

Der Zulauf- 14 und Ablaufstutzen 16 sind nicht zentral,
sondern seitlich im Boden 22 und Deckel 12 des
Zylinders 10 angebracht. Dadurch besteht die Möglichkeit, den Zylinder 10 auch längs durchströmen zu lassen
(Fig. 1b), falls kein entsprechend hohes Gefälle vorhanden ist. Dazu wird der Durchflußbehälter so angebracht, daß sich der Zulaufstutzen 14 an der tiefsten
und der Ablaufstutzen 16 an der höchsten Stelle
befindet. Der Durchfluß erfolgt dann diagonal. Der
Zulauf- 14 und Ablaufstutzen 16 können aber auch zentral
im Boden 22 und Deckel 12 des Zylinders 10 angebracht
sein .

Bevorzugt ist an der Außenwand des transparenten Zylinders 10 eine Marke 18 in Form eines Ringes angebracht.
Diese Markierung zeigt den Mindeststand an Neutralisations-Granulat an. Ist das Material auf diese Höhe

- 8 -

herabgesunken, muß der Zylinder mit neuem Neutralisationsmaterial aufgefüllt werden.Am oberen Teil des
Zylinders 10 kann innen eine Vorrichtung 27 angebracht
sein, die anzeigt, ob neutrales oder saures Kondensat
die Durchflußapparatur verläßt. Diese Anzeige kann
durch Farbänderung eines Indikators oder ein anderes
Signal erfolgen.

Im Zylinder 10 des Durchflußbehälters befinden sich die
drei zur Neutralisation erforderlichen Schichten. In
einer bevorzugten Ausführungsform werden für eine
bequeme und leichte Handhabung die drei Stoffe in einer
gemeinsamen oder auch getrennten Patrone 11 schichtweise
in entsprechenden Mengen und Schichthöhen angeordnet.
Dabei wird die Menge und Schichthöhe der einzelnen
Komponenten nach dem Kondensatanfall einer oder mehrerer
Heizperioden festgelegt. Als Behälter wird bevorzugt
ein allseits geschlossener Siebkörper 7 aus Kunststoffgewebe verwendet. Zweckmäßigerweise stellt er ein
gitterartiges Gebilde dar, dessen Poren kleiner sind
als die Teilchen der in der Patrone enthaltenen Schichten.

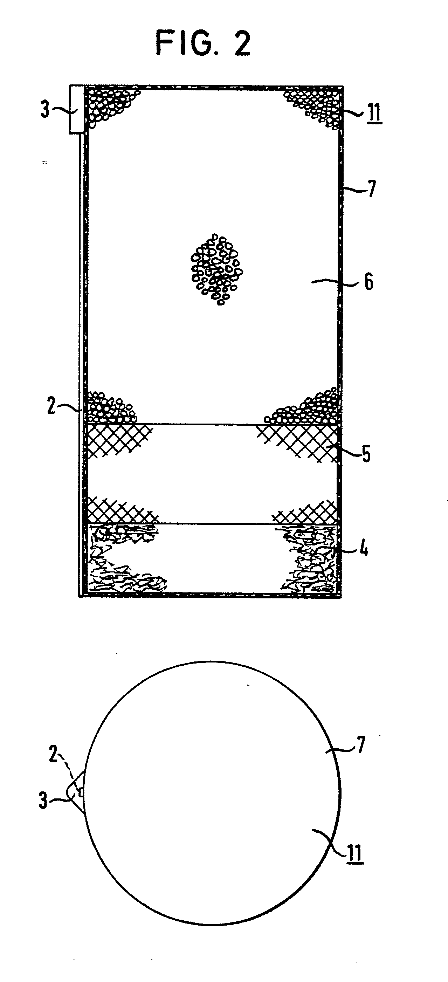

Eine bevorzugte Ausführungsform der auswechselbaren
Neutralisations-Patrone 11 ist in Fig. 2 dargestellt.
Dabei hat der Siebkörper 7 eine Führung 2 und am oberen
Ende einen Nocken 3, damit die einzelnen Schichten der
Nachfüllpatrone immer in der richtigen Reihenfolge in
dem Durchflußbehälter angeordnet sind. In dem Siebkörper
7 sind nacheinander angeordnet eine Quarzkiesschicht 4,
eine Aktiv-Kohleschicht 5 und eine Magnesiumoxidschicht
6. Je nach Kondensatanfall (z. B. bei größeren Brennwertkesseln) können auch zwei oder mehrere Neutralisations-
Patronen übereinander oder nebeneinander in größeren
Durchflußbehältern angeordnet werden.

Um zu gewährleisten, daß der Abstand zwischen Zylinder und Patrone möglichst gering ist und das saure Kondensat nicht durch diesen Hohlraum fließen kann, kann in dem Zylinder 10 eine Einrastmöglichkeit für die Nocke der Neutralisations-Patrone vorgesehen sein. Durch die Führung mit Nocke ist außerdem gesichert, daß die Patrone immer richtig, d. h. mit der richtigen Schichtfolge, eingelegt wird.

Nach einer bestimmten Laufzeit (eine oder mehrere Heizperioden) oder dann, wenn die Mindestschichthöhe an Neutralisations-Granulat erreicht ist, muß die Neutralisations-Patrone ausgewechselt und durch eine neue ersetzt werden. Der Siebkörper und die darin enthaltenen Stoffe, Quarzkies, Aktivkohle und das restliche Neutralisations-Granulat, können ohne Bedenken in die allgemeine Müllentsorgung gegeben werden, da keine umweltbelastenden Stoffe vorliegen. Sollten möglicherweise größere Mengen von Kohlenwasserstoffen aus dem Kondensat von der Aktivkohle adsorbiert worden sein, so sind diese so fest an der Aktivkohle gebunden, daß sie selbst durch kräftiges und längeres Rühren in Wasser nicht wieder abgegeben werden.

Die erfindungsgemäße Vorrichtung ermöglicht es auf einfache, gefahrlose und wirtschaftliche Weise, Rauchgas- und Abgas-Kondensat zu neutralisieren. Durch die einfache Handhabung ist sie auch im häuslichen Bereich anwendbar. Sie führt zu einer Verringerung der Schadstoffbelastung im Abwasser, während sie keine umweltbelastenden Rück-stände schafft.

– 1 –

P a t e n t a n s p r ü c h e

1. Vorrichtung zur Neutralisation von Rauchgas- und Abgas-Kondensaten , d a d u r c h g e k e n n z e i c h n e t , daß in einem Durchflußbehälter nacheinander angeordnet sind eine Quarzkiesschicht, eine Aktivkohleschicht und eine Magnesiumoxid/Magnesiumcarbonatschicht.

2. Vorrichtung nach Anspruch 1, d a d u r c h g e k e n n z e i c h n e t , daß das Magnesiumoxid/Magnesiumcarbonat in Form eines Granulates vorliegt mit einer kugeligen, porösen Kornstruktur.

3. Vorrichtung nach Anspruch 2, d a d u r c h g e k e n n z e i c h n e t , daß das Magnesiumoxid/Magnesiumcarbonatgranulat eine Korngröße von 1 bis 10mm, vorzugsweise von 2 bis 5 mm hat.

4. Vorrichtung nach einem der vorhergehenden Ansprüche, d a d u r c h g e k e n n z e i c h n e t , daß sie in Form einer Nachfüllpatrone vorliegt, die aus einem Siebkörper aus Kunststoffgewebe, der allseitig geschlossen ist, besteht, in dem die Schichten nacheinander angeordnet sind.

5. Vorrichtung nach Anspruch 4, d a d u r c h g e k e n n z e i c h n e t , daß der Siebkörper eine Führung und an einem Ende einen Nocken zum arretieren hat.

6. Durchflußbehälter zur Neutralisation von Rauchgas-
und Abgaskondensaten,
g e k e n n z e i c h n e t   durch einen Zylinder
(10), der oben mit einem abschraubbaren Deckel
(12) versehen ist, einen Zulauf (14) im Boden, der
abschraubbar sein kann, des Behälters und einen
Ablauf (16) im Deckel des Behälters und zur Aufnahme einer Neutralisationspatrone (11) eingerichtet ist.

7. Durchflußbehälter nach Anspruch 6,
d a d u r c h   g e k e n n z e i c h n e t ,
daß der Zylinder aus transparentem Kunststoff besteht.

8. Durchflußbehälter nach Anspruch 7 oder 8,
d a d u r c h   g e k e n n z e i c h n e t ,
daß vor dem Zulaufstutzen (14) und nach dem Ablaufstutzen (16) Geruchsverschlüsse (20, 26) angebracht
sind.

9. Durchflußbehälter nach Anspruch 6,
d a d u r c h   g e k e n n z e i c h n e t ,
daß der Zylinder (10) eine Führung und eine Einrastmöglichkeit für die Nocke und die Führung der
Patrone (11) hat.

10. Durchflußbehälter nach Anspruch 6,
d a d u r c h   g e k e n n z e i c h n e t ,
daß im Zylinder (10) eine Vorrichtung (27) vorgesehen ist, die anzeigt,ob saures oder neutrales
Kondensat den Durchflußbehälter verläßt.

# FIG. 1a

# FIG. 1b

# FIG. 2

Europäisches
Patentamt

**EUROPÄISCHER RECHERCHENBERICHT**

**0162195**
Nummer der Anmeldung

EP 85 10 1775

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | AT-B- 192 345 (CHEMIEPRODUKTE K.G.) * Anspruch * | 1-3 | C 02 F 1/66<br>B 01 D 53/34 |
| A | PATENT ABSTRACTS OF JAPAN, Band 7, Nr. 66, 18. März 1983, Seite (C-157) (1211); & JP-A-58-293 (MATSUSHITA DENKI SANGYO K.K.) 05-01-1983 | 1,2 | |
| A | US-A-4 378 293 (D.T. DUKE) * Anspruch 1; Figur 1 * | 4,6 | |
| A | EP-A-0 076 898 (GEBR. SULZER AG) * Ansprüche 1, 3; Figur * | 1 | |
| A | PATENT ABSTRACTS OF JAPAN, Band 7, Nr. 242, 27. Oktober 1983, Seite (C-192) (1387); & JP-A-58-131194 (MATSUSHITA DENKI SANGYO K.K.) 04-08-1983 | 1,4 | RECHERCHIERTE SACHGEBIETE (Int. Cl.4)<br><br>C 02 F 1/00<br>B 01 D 53/00 |

Der vorliegende Recherchenbericht wurde für alle Patentansprüche erstellt.

| Recherchenort<br>BERLIN | Abschlußdatum der Recherche<br>01-07-1985 | Prüfer<br>BERTRAM H E H |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82